# EUROPÄISCHE PATENTSCHRIFT

(11) **EP 2 321 126 B1**
(45) Veröffentlichungstag und Bekanntmachung des Hinweises auf die Patenterteilung: **08.06.2016**
(21) Anmeldenummer: 09737845.9
(22) Anmeldetag: 23.04.2009
(51) Int. Cl.: B32B 27/32

(54) **MEMBRANFOLIE FÜR BATTERIEN MIT ABSCHALTFUNKTION**
MEMBRANE FILM FOR BATTERIES, HAVING A SHUT-OFF FUNCTION
FILM MEMBRANAIRE POUR PILES, À FONCTION DE RUPTURE

(30) Priorität: 02.05.2008 DE 102008021995
(43) Veröffentlichungstag der Anmeldung: 18.05.2011
(73) Patentinhaber: Treofan Germany GmbH & Co. KG, 66539 Neunkirchen (DE)
(72) Erfinder: PETERS, Christian, 66386 St. Ingbert (DE); MOHR, Thilo, 66424 Homburg (DE); BUSCH, Detlef, 66740 Saarlouis (DE); SCHMITZ, Bertram, F-57200 Saargemuines (FR)
(74) Vertreter: Kremer, Viola
(86) Internationale Anmeldenummer: PCT/EP2009/002960
(87) Internationale Veröffentlichungsnummer: WO 2009/132801

(56) Entgegenhaltungen:
- WO-A2-2007/051103

## Beschreibung

Die vorliegende Erfindung betrifft eine mikroporöse Folie und ihre Verwendung als Separator in Batterien.

Moderne Geräte erfordern eine Energiequelle, wie Batterien oder Akkus, die eine räumlich unabhängige Nutzung ermöglichen. Batterien haben den Nachteil, daß man sie entsorgen muß. Daher werden vermehrt Akkumulatoren (sekundäre Batterien) eingesetzt, die man mit Hilfe von Ladegeräten am Stromnetz immer wieder aufladen kann. Nickel-Cadmium-Akkus (NiCd-Akkus) können beispielsweise bei sachgerechtem Gebrauch eine Lebensdauer von ca. 1000 Ladezyklen erreichen.

Batterien und Akkus bestehen immer aus zwei Elektroden, die in eine Elektrolytlösung eintauchen und einem Separator, der Anode und Kathode trennt. Die verschiedenen Akkutypen unterscheiden sich durch das verwendete Elektrodenmaterial, den Elektrolyten und den verwendeten Separator. Beim Laden läßt man einen Strom durch den Akku fließen. Der Stromfluß setzt eine elektrochemische Reaktion an den Elektroden in Gang. Ist der Akku geladen, kann man ihm so lange Strom entnehmen bis die, im Vergleich zum Ladevorgang umgekehrte, chemische Reaktion zum Erliegen gekommen ist.

Ein Batterieseparator hat die Aufgabe Kathode und Anode in Batterien, beziehungsweise negative und positive Elektrode in Akkumulatoren, räumlich zu trennen. Der Separator muß eine Barriere sein, welche die beiden Elektroden elektrisch voneinander isoliert, um interne Kurzschlüsse zu vermeiden. Gleichzeitig muß der Separator jedoch durchlässig für Ionen sein, damit die elektrochemischen Reaktionen in der Zelle ablaufen können.

Ein Batterieseparator muß dünn sein, damit der Innenwiderstand möglichst gering ist und eine hohe Packungsdichte erzielt werden kann. Nur so sind gute Leistungsdaten und hohe Kapazitäten möglich. Zusätzlich ist es erforderlich, daß die Separatoren den Elektrolyten aufsaugen und bei gefüllten Zellen den Ionenaustausch gewährleisten. Während früher u. a. Gewebe verwendet wurden, sind heutzutage überwiegend feinporige Materialien, wie Vliesstoffe und Membranen, im Einsatz.

So wie es unterschiedliche Batteriesysteme gibt, müssen auch die darin eingesetzten Separatoren unterschieden werden, z.B. nach dem Elektrolyten, dem sie im Verlaufe der Lebensdauer ausgesetzt sind. Ein weiteres Kriterium für die Separatorauswahl ist der Preis. Separatoren, die über viele Lade-/Entladezyklen hinweg stabil sind, werden aus höherwertigen Materialien gefertigt als solche, die in preiswerten Wegwerfbatterien eingesetzt werden.

Insbesondere in Lithium-Batterien ist das Auftreten von Kurzschlüssen ein Problem. Bei thermischer Belastung kann es in den Lithium-Ionen-Batterien zu einem Schmelzen des Batterieseparators und damit zu einem Kurzschluss mit verheerenden Folgen kommen. Ähnliche Gefahren bestehen, wenn die Lithium Batterien mechanisch beschädigt werden oder durch mangelhafte Elektronik der Ladegeräte überladen werden.

Um die Sicherheit der Lithium-Ionen-Batterien zu erhöhen, wurden in der Vergangenheit Abschalt-Separatoren entwickelt (Shut Down Membranen). Diese speziellen Separatoren schließen ihre Poren in kürzester Zeit bei einer bestimmten Temperatur, die deutlich unterhalb des Schmelzpunktes oder des Zündpunktes von Lithium liegt. Damit werden die katastrophalen Folgen eines Kurzschlusses bei den Lithium-Batterien weitgehend verhindert.

Gleichzeitig ist jedoch für die Separatoren auch eine hohe mechanische Festigkeit gewünscht, welche durch Materialien mit hohen Schmelzetemperaturen gewährleistet wird. So sind beispielsweise Polypropylen-Membranen auf Grund der guten Durchstoßfestigkeit vorteilhaft, aber der Schmelzpunkt des Polypropylens liegt mit ca. 164°C sehr nahe am Flammpunkt des Lithiums (170°C).

Es ist im Stand der Technik bekannt Polypropylenmembranen mit weiteren Schichten zu kombinieren, die aus Materialien mit niedrigerem Schmelzpunkt aufgebaut sind, beispielsweise aus Polyethylen. Derartige Modifikationen der Separatoren dürfen natürlich die sonstigen Eigenschaften, wie Porosität, nicht nachteilig beeinflussen und die lonenmigration nicht behindern. Der Einbau von Polyethylen-Schichten beinflußt die Durchlässigkeit und die mechanische Festigkeit des Separators insgesamt jedoch sehr negativ. Zusätzlich ist die Haftung der Polyethylenschichten auf Polypropylen problematisch, so daß nur ausgewählte Polymere dieser beiden Klassen coextrudiert werden können.

Die WO2007/051103 beschreibt eine Folie mit mindestens zwei Schichten. Die erste Schicht mit niedriger Kristallinität enthält ein Polymer mit niedriger Kristallinität. Die zweite Schicht mit hohe Kristallinität enthält ein Polymer mit hoher Kristallinität.
Das Polymer mit hoher Kristallinität hat einen Schmelzpunkt (DSC), der etwa gleich oder bis zu 25 ° C niedriger ist als der Schmelzpunkt des Polymers mit niedriger Kristallinität. Die Folie wird unterhalb des Schmelzpunkts des niedrig kristallinen Polymers gestreckt. Die Folie kann ein Nukleierungsmittel enthalten, welches die Steifigkeit der Folie erhöht.

Die Aufgabe der vorliegenden Erfindung bestand darin, einen Separator für Batterien zur Verfügung zu stellen, welcher eine Abschaltfunktion und hervorragende mechanische Festigkeit aufweist. Des weiteren soll die Membran durch einfache kostengünstige Verfahren herstellbar sein.

Die der Erfindung zugrundeliegende Aufgabe wird gelöst durch eine biaxial orientierte mikroporöse Folie, aus mindestens zwei coextrudierten Schichten, umfassend mindestens eine äußere Abschaltschicht und eine weitere Schicht, wobei alle Schichten eine Mischung aus Propylenhomopolymer und Propylen-Blockcopolymer und ß-Nukleierungsmittel enthalten und wobei das Propylenblockcopolymere I der weitere Schicht einen Schmelzpunkt von über 140°C aufweist und der Schmelzbereich des Propylenblockcopolymer II der äußeren Abschaltschicht bei einer Temperatur im Bereich von 50 bis 120°C beginnt und wobei der Schmelzpunkt des Propylenblockcopolymeren I größer ist als der Schmelzpunkt des Propylenblockcopolymeren II.

Überraschenderweise weißt die erfindungsgemäße Folie bei der Verwendung als Separator sowohl eine sehr gute mechanische Festigkeit als auch die gewünschte Abschaltfunktion auf. Die Gasdurchlässigkeit der Folie wird signifikant reduziert, wenn die Folie einer erhöhten Temperatur ausgesetzt wird. Beispielsweise erhöht sich der Gurley Wert um mindestens 30% (bezogen auf den ursprünglichen Wert) vorzugsweise um 40 bis 80% nach einer Temperaturbehandlung von einer Minute bei 130°C. Im allgemeinen weist die erfindungsgemäße Folie nach dieser Temperaturbehandlung (1min@130°C) einen Gurleywert von mindestens 6000 s, vorzugsweise 10.000 bis 500.000s, insbesondere 15.000 bis 100.000s auf. Somit kann die Folie bei ihrer erfindungsgemäßen Verwendung als Separator in Batterien die Folgen eines Kurzschlusses wirksam verhindern. Treten in Folge eines Kurzschlusses erhöhte Temperaturen im Inneren der Batterie auf, werden die Poren des Separators durch den Zusatz des speziellen Blockcopolymeren II in der inneren Schicht oder den inneren Schichten in kurzer Zeit so geschlossen, daß ein weiterer Durchtritt von Gasen bzw. Ionen unterbunden und die Kettenreaktion unterbrochen wird.

Alle Schichten der Folie enthalten als Hauptkomponenten ein Propylenhomopolymer und Propylenblockcopolymer mit dem jeweils gewählten Schmelzpunkt, bzw. den jeweiligen Schmelzeeigenschaften und mindestens ein ß-Nukleierungsmittel, sowie gegebenenfalls andere Polyolefine in geringen Mengen, soweit sie die Porösität und andere wesentliche Eigenschaften nicht nachteilig beeinflussen und gegebenenfalls übliche Additive, beispielsweise Stabilisatoren, Neutralisationsmittel und/oder unverträgliche Partikel in jeweils wirksamen Mengen.

Im allgemeinen enthält jede Schichten jeweils 50 bis 90 Gew.-%, vorzugsweise 50 bis 80 Gew.-%, insbesondere 55 bis 75 Gew.-%, Propylenhomopolymere und 10 - 50 Gew.-% Propylenblockcopolymere, vorzugsweise 20 bis 50 Gew.-%, insbesondere 25 bis 45 Gew.-% und 0,001 bis 5 Gew.-%, vorzugsweise 50 - 10.000 ppm mindestens eines ß-Nukleierungsmittels, bezogen auf das Gewicht der jeweiligen Schicht. Für den Fall, daß weitere Polyolefine in der oder den Schichten enthalten sind, wird der Anteil des Propylenhomopolymeren entsprechend reduziert. Im allgemeinen wird die Menge der zusätzlichen Polymeren 0 bis <30 Gew.-%, vorzugsweise 0 bis 20 Gew.-%, insbesondere 0,5 bis 5 Gew.-% betragen, wenn diese zusätzlich enthalten sind. In gleicher Weise gilt, daß der besagte Propylenhomopolymer Anteil reduziert wird, wenn höhere Mengen von bis zu 5 Gew.-% Nukleierungsmittel eingesetzt werden. Die Anteile der einzelnen Komponenten können in allen Schichten gleich oder verschieden sein und prinzipiell unabhängig voneinander gewählt werden.

Geeignete Propylenhomopolymeren enthalten 98 bis 100 Gew.-%, vorzugsweise 99 bis 100 Gew.-% Propyleneinheiten und besitzen einen Schmelzpunkt (DSC) von 150°C oder höher, vorzugsweise 150 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% (¹³C-NMR; Triaden Methode) eingesetzt werden. Diese Rohstoffe sind als HIPP (Hoch isotaktische Polypropylene) oder HCPP (Hoch Kristalline Polypropylene) Polymere im Stand der Technik bekannt und zeichnen sich durch eine hohe Stereoregularität der Polymerketten, höhere Kristallinität und einen höheren Schmelzpunkt aus, im Vergleich zu Propylenpolymeren mit einer ¹³C-NMR-lsotaktizität von unter 96%, vorzugsweise 92 bis 95%, die gleichfalls eingesetzt werden können (¹³ C-NMR; Triaden Methode).

Die eingesetzten Propylenblockcopolymere jeder Schicht enthalten überwiegend, d.h. mehr als 50 Gew.-%, vorzugsweise 70 bis 99 Gew.-%, insbesondere 90 bis 99 Gew.-% Propyleneinheiten. Geeignete Comonomere in entsprechenden Menge, beispielsweise <50Gew.-%; 1 bis 30 Gew.-%; 1 bis 10 Gew.-%, sind Ethylen, Butylen oder höhere Alkenhomologe, worunter Ethylen bevorzugt ist.

Die erfindungsgemäße Folie zeichnet sich dadurch aus, daß mindestens eine äußere Abschaltschicht ein spezielles Propylen-Blockcopolymer II enthält, welches vom Propylen-Blockcopolymeren I der weiteren Schicht verschieden ist. Dieses Blockcopolymer II weißt ein anderes Schmelzverhalten als das Blockcopolymer I der weiteren Schicht auf. Die Zusammensetzung der äußeren Abschaltschicht führt bei erhöhten Temperaturen zu einem Verschluß der Poren, so daß die Durchlässigkeit der mikroporösen Folie deutlich herabgesetzt wird. Diese äußere Schicht wird daher auch als Abschaltschicht bezeichnet. Demgegenüber weist die weitere Schicht, welche das Propylen-Blockpolymere I enthält, diese Abschaltfunktion nicht auf.

Es ist erfindungswesentlich, daß der Schmelzpunkt des Blockcopolymeren I der weiteren Schicht höher ist, als der Schmelzpunkt des Blockcopolymeren II der äußeren Abschaltschicht. Der Schmelzpunkt des Blockcopolymeren II der äußeren Abschaltschicht liegt im allgemeinen unter 150°C, vorzugsweise in einem Bereich von 100 bis 145 °C. Blockcopolymere mit höherem Schmelzpunkt von über 150°C in der äußeren Schicht führen im allgemeinen nicht in der gewünschten Weise, insbesondere nicht schnell genug, zum Verschluß der Poren bei Temperaturen unterhalb des Flammpunktes von Lithium.

Zusätzlich ist es wesentlich, daß das Blockcopolymere II bei vergleichsweise niedrigen Temperaturen zu schmelzen beginnt, d.h. der Schmelzebereich gemäß DSC beginnt bei einer Temperatur im Bereich von 50 bis 120°C, vorzugsweise bei 50 bis 110°C, insbesondere beginnt der Schmelzebereich bei 55 bis 100°C. Das bedeutet der Beginn des Schmelzebereichs ist eine bestimmte Temperatur, die innerhalb der oben genannten Temperaturbereiche liegt und kennzeichnet, wann der Schmelzevorgang beginnt.

Überraschenderweise beeinträchtigt das Zumischen eines in diesem Sinne niedrigschmelzenden Blockcopoolymeren II die Festigkeit der Folie nicht in der erwarteten Weise. Die Folien weisen dennoch die gute mechanische Festigkeit auf. Für Blockcopolymere II ist ein höherer Comonomer-, vorzugsweise Ethylen-Gehalt bevorzugt und liegt im allgemeinen zwischen 10 und 50 Gew.-%, bevorzugt 10 und 25 Gew.-%. Der Schmelzflußindex der Blockcopolymeren II liegt im allgemeinen in einem Bereich von 0,1 bis 10 g/10min, vorzugsweise 0,3 bis 5g/10Min.

Des weiteren ist es wesentlich, daß das Blockcopolymere I der weitere Schicht einen Schmelzpunkt von über 140 bis 170°C aufweist, vorzugsweise von 150 bis 165°C, insbesondere 150 bis 160°C. Der Schmelzebereich dieser Blockcopolymeren I beginnt im allgemeinen bei über 120°, vorzugsweise im Bereich von 125 - 140°C. Für Blockcopolymere I ist ein niedrigerer Comonomer-, vorzugsweise Ethylen-, Gehalt bevorzugt und liegt im allgemeinen zwischen 1 und 20 Gew.-%, bevorzugt 1 und 10 Gew.-%. Im allgemeinen enthält das Blockcopolymeren I weniger Comonomer, vorzugsweise Ethylen, als das Blockcopolymeren II. Der Schmelzflußindex der Blockcopolymeren I liegt im allgemeinen in einem Bereich von 1 bis 20 g/10min, vorzugsweise 1 bis 10 g/10min.

Die Parameter "Schmelzpunkt" und "Beginn des Schmelzebereichs" werden mittels DSC-Messung bestimmt und aus der DSC-Kurve, wie bei den Meßmethoden beschrieben, ermittelt.

Gegebenenfalls kann jede Schicht der Folie (Innen- und Außenschichten) zusätzlich zu dem Propylenhomopolymeren und Propylen-Blockcopolymeren andere Polyolefine enthalten. Der Anteil dieser anderen Polyolefine liegt im allgemeinen unter 30 Gew.-%, vorzugsweise in einem Bereich von 1 bis 10 Gew.-%. Andere Polyolefine sind beispielsweise statistische Copolymere von Ethylen und Propylen mit einem Ethylengehalt von 20 Gew.-% oder weniger, statistische Copolymere von Propylen mit C₄-C₈-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder Polyethylene, wie HDPE, LDPE, VLDPE, MDPE und LLDPE.

Als ß-Nukleierungsmittel für die mikroporösen Schichten sind grundsätzlich alle bekannten Zusatzstoffe geeignet, welche die Bildung von ß-Kristallen des Polypropylens beim Abkühlen einer Polypropylenschmelze fördern. Derartige β-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt bei ca. 158 - 162 °C liegt. Durch eine bestimmte Temperaturführung kann beim Abkühlen ein geringer Anteil an ß-kristalliner Phase erzeugt werden, welche gegenüber der monoklinen α-Modifikation mit 148-150°C einen deutlich niedrigeren Schmelzpunkt aufweist. Im Stand der Technik sind Additive bekannt, die zu einem erhöhten Anteil der ß-Modifikation beim Abkühlen des Polypropylens führen, beispielsweise γ-Quinacridone, Dihydroquinacridine oder Calciumsalze der Phtalatsäure.

Für die Zwecke der vorliegenden Erfindung werden vorzugsweise hochaktive β-Nukleierungsmittel eingesetzt, welche beim Abkühlen des Schmelzefilms einen β-Anteil von 40-95%, vorzugsweise von 50-85% (DSC) erzeugen. Der ß-Anteil wird aus dem DSC des abgekühlten Schmelzefilms bestimmt. Hierfür ist beispielsweise ein zweikomponentiges Nukleierungssystem aus Calciumcarbonat und organischen Dicarbonsäuren geeignet, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide insbesondere N,N-Dicyclohexyl-2,6-Naphtalendicarboxamide sind geeignete ß-Nukleierungsmittel.

Zusätzlich zu den Nukleierungsmitteln ist die Einhaltung eines bestimmten Temperaturbereiches und Verweilzeiten bei diesen Temperaturen beim Abkühlen des Schmelzefilms für die Erzielung eines hohen Anteils an ß-kristallinem Polypropylen wichtig. Die Abkühlung des Schmelzefilms erfolgt vorzugsweise bei einer Temperatur von 60 bis 130°C, insbesondere 80 bis 120°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min.

Besonders bevorzugte Ausführungsformen der erfindungsgemäßen mikroporösen Folie enthalten 50 bis 10.000ppm, vorzugsweise 50 bis 5000ppm, insbesondere 50 bis 2000ppm Calcium-Pimelat oder Calcium-Suberat in der jeweiligen Schicht.

Die mikroporöse Membranfolie ist mehrschichtig und umfaßt mindestens eine äußeren Abschaltschicht und eine weitere Schicht der vorstehend beschriebenen Zusammensetzung, die keine derartige Abschaltfunktion aufweist. Gegebenenfalls kann die Folie zweischichtig sein und besteht dann nur aus einer äußeren Abschaltschicht und einer weiteren Schicht. Vorzugsweise umfaßt die Membranfolie 3 Schichten, wobei beidseitig äußere Abschaltschichten auf der weiteren Schicht angebracht sind, welche dann die zentrale innere Basisschicht der Folie bildet. In einer weiteren Ausführungsform kann die Folie vier- oder fünfschichtig sein, wobei mindestens eine äußere Abschaltschicht mit einer zentralen Basisschicht und ein- oder beidseitigen Zwischenschicht/en und einer weiteren äußeren Schicht ohne Abschaltfunktion kombiniert wird. Die zusätzliche/n Zwischenschicht/en ist/sind vorzugsweise wie die vorstehend beschriebene weitere Schicht ohne Abschaltfunktion aufgebaut. Die Basisschicht kann in ihrer Zusammensetzung sowohl der äußeren Abschaltschicht als auch der weiteren Schicht entsprechen. Unter der Basisschicht wird im Sinne der vorliegenden Folie die Schicht mit der größten Dicke verstanden. Die Basisschicht ist außer bei zweischichtigen Ausführungsformen eine innenliegende, zentrale Schicht.

In einer weiteren vier- oder fünfschichtig Ausführungsform ist die äußere Abschaltschicht mit einer zentrale Basisschicht und ein- oder beidseitigen Zwischenschicht/en und einer zweiten äußeren Abschaltschicht kombiniert wird. Auch hier ist/sind dann die zusätzliche/n Zwischenschicht/en vorzugsweise wie die vorstehend beschriebene weitere Schicht ohne Abschaltfunktion aufgebaut. Die Basisschicht kann ebenfalls in ihrer Zusammensetzung sowohl der äußeren Abschaltschicht als auch der weiteren Schicht ohne Abschaltfunktion entsprechen.

In allen diesen Ausführungsformen müssen mehrere Abschaltschichten und mehrere weitere Schichten nicht zwingend eine identische Zusammensetzung aufweisen, sondern vielmehr in ihrer Zusammensetzung der allgemeinen Beschreibung für diese Schichten entsprechen.

Die Dicke der Membranfolie liegt im allgemeinen in einem Bereich von 15 bis 100µm, vorzugsweise 20 bis 80µm. Die äußere Abschaltschicht hat im allgemeinen eine Dicke von 3 bis 30µm, vorzugsweise 5 bis 20µm, insbesondere 7 bis 15µm. Die Dicke der weiteren Schicht beträgt im allgemeinen 0,5 bis 30µm, vorzugsweise 1 bis 25µm. Die Dicken der zusätzlichen Schichten können in einem breiten Bereich variieren, um die gewünschte Gesamtdicke der Membranfolie einzustellen.

Die mikroporöse Folie kann mit einer Corona, Flamm- oder Plasmabehandlung versehen werden, um die Befüllung mit Elektrolyten zu verbessern

Die Dichte der mikroporösen Membranfolie liegt im allgemeinen in einem Bereich von 0,2 bis 0,6 g/cm³, vorzugsweise 0,3 bis 0,5 g/cm³. Für die Verwendung der Folie als Separator in Batterien sollte die Folie einen Gurley Wert von 100 bis 5000 s aufweisen, vorzugsweise von 500 bis 2500 s. Dies ist selbstverständlich der Gurley-Wert der Folie vor der Temperaturbehandlung. Der Bubble point der Folie sollte nicht über 350nm, vorzugsweise 50 bis 300nm liegen und der mittlere Porendurchmesser sollte im Bereich 50 bis 100 nm, bevorzugt im Bereich 60 - 80 nm liegen.

Unter "Abschaltfunktion" wird im Sinne der vorliegenden Erfindung eine erniedrigte Gasdurchlässigkeit unter Einfluß einer erhöhten Temperatur verstanden. Die erfindungsgemäße Folie zeigt auf Grund der inneren Abschaltschicht diese Abschaltfunktion. Der Gurley Wert der Folie wird um mindestens 30%, vorzugsweise um 40 - 80% gegenüber dem ursprünglichen Wert erhöht, wenn man die Folie eine Minute lang einer Temperatur von 130°C aussetzt. Im allgemeinen weist die erfindungsgemäße Folie nach dieser Temperaturbehandlung (1min@130°C) einen Gurleywert von mindestens 6000 s, vorzugsweise 10.000 bis 500.000s, insbesondere 15.000 bis 100.000s auf. Die Ermittlung erfolgt im Prinzip nach der beschriebenen Methode für die Bestimmung der Gasdurchlässigkeit, in dem diese Messung vor und nach der Temperaturbelastung an der Folie ausgeführt wird.

Die erfindungsgemäße poröse Folie wird vorzugsweise nach dem an sich bekannten Coextrusionsverfahren hergestellt.

Im Rahmen dieses Verfahrens wird so vorgegangen, daß die Mischungen aus Propylenhomopolymer, Propylenblockcopolymer I oder II und ß-Nukleierungsmittel der jeweiligen Schichten in Extrudern aufgeschmolzen und durch eine Flachdüse auf eine Abzugswalze coextrudiert werden, auf der sich der mehrschichtige Schmelzefilm unter Ausbildung der ß-Kristallite verfestigt und abkühlt. Die Abkühltemperaturen und Abkühlzeiten werden so gewählt, daß ein möglichst hoher Anteil an ß-kristallinem Polypropylen in der Vorfolie entsteht. Diese Vorfolie mit einem hohen Anteil an ß-kristallinem Polypropylen wird anschließend derart biaxial gestreckt, daß es bei der Verstreckung zu einer Umwandlung der ß-Kristallite in α-Polypropylen kommt. Die biaxial gestreckte Folie wird abschließend thermofixiert und gegebenenfalls auf einer Oberfläche corona-, plasma- oder flammbehandelt.

Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Die Abzugswalze oder die Abzugswalzen werden bei einer Temperatur von 60 bis 130°C, vorzugsweise 90 bis 120°C gehalten, um die Ausbildung eines hohen Anteils an ß-kristallinem Polypropylen zu fördern.

Bei der Verstreckung in Längsrichtung beträgt die Temperatur weniger als 140°C, vorzugsweise 80 bis 120 °C. Das Längs-Streckverhältnis liegt in einem Bereich 2,0:1 bis 5:1 Die Verstreckung in Querrichtung erfolgt bei einer Temperatur von kleiner 140°C und sollte so gewählt werden, daß die Querstrecktemperatur unterhalb des Schmelzpunktes des Propylenblockcopolymeren II der äußeren Schicht liegt. Das Querstreckverhältnis liegt in einem Bereich von 2,5:1 bis 7,5:1 gestreckt.

Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich im allgemeinen ihre Thermofixierung (Wärmebehandlung) an, wobei die Folie etwa 0,5 bis 10 s lang bei einer Temperatur von 110 bis 130°C gehalten wird. Anschließend wird die Folie in üblicher Weise mit einer Aufwickeleinrichtung aufgewickelt.

Gegebenenfalls wird, wie oben erwähnt, nach der biaxialen Streckung eine Oberfläche der Folie nach einer der bekannten Methoden corona-, plasma- oder flammbehandelt.

### Zur Charakterisierung der Rohstoffe und der Folien wurden die folgenden Meßmethoden benutzt:

### Schmelzflußindex

Der Schmelzflußindex der Propylenpolymeren und des Propylenblockcopolymeren wurde nach DIN 53 735 bei 2,16 kg Belastung und 230°C gemessen und bei 190°C und 2,16 kg für Polyethylene.

### Schmelzpunkte und Beginn des Schmelzebereich

Teilkristalline thermoplastische Polymere wie beispielsweise Propylenpolymere besitzen auf Grund der unterschiedlichen kristallinen Bereiche oder Phasen keinen festen Schmelzpunkt, sondern einen Schmelzebereich. Schmelzpunkt und Schmelzbereich sind daher Werte, die in einer genau definierten Weise aus einer DSC Kurve des jeweiligen Polymeren abgeleitet werden. Bei der DSC Messung wird dem Polymeren mit einer definierten Aufheizrate eine Wärmemenge pro Zeiteinheit zugeführt und der Wärmestrom gegen die Temperatur aufgetragen, d.h. die Änderung der Enthalpie als abweichender Verlauf des Wärmestroms von der Basislinie gemessen. Unter der Basislinie versteht man den (linearen) Teil der Kurve in dem keine Phasen-Umwandlungen stattfinden. Hier gilt ein linearer Zusammenhang zwischen der zugeführten Wärmemenge und der Temperatur. In dem Bereich in dem Schmelzevorgänge stattfinden erhöht sich der Wärmestrom um die notwendige Schmelzenergie und die DSC Kurve steigt an. In dem Bereich in dem die meisten Kristallite schmelzen durchläuft die Kurve ein Maximum und fällt, nach dem alle Kristallite aufgeschmolzen sind, wieder auf die Basislinie ab. Der Schmelzpunkt ist im Sinne der vorliegenden Erfindung das Maximum der DSC Kurve. Der Beginn des Schmelzbereich ist im Sinne der vorliegenden Erfindung diejenige Temperatur bei der die DSC Kurve von der Basislinie abweicht und der Anstieg der DSC Kurve beginnt.

Zur Bestimmung des Schmelzpunkts und dem Beginn des Schmelzebereichs wird die DSC-Kurve mit einer Aufheiz- und Abkühlgeschwindigkeit von 10K/1min im Bereich von 20 bis 200°C aufgenommen. Für die Bestimmung des Schmelzpunkts und des Schmelzbereichs der Polymeren wird wie üblich die zweite Aufheizkurve ausgewertet.

### ß-Gehalt der Vorfolie

Die Bestimmung des ß-Gehaltes der Vorfolie erfolgt ebenfalls über eine DSC-Messung, die an der Vorfolie folgendermaßen durchgeführt wird: Die Vorfolie wird in der DSC zunächst mit einer Aufheizrate von 10K/min auf 220°C erhitzt und aufgeschmolzen und wieder abgekühlt Aus der 1.Aufheizkurve wird der Kristallinitätsgrad K_{ß,DSC} als Verhältnis der Schmelzenthalpien der ß-kristallinen Phase (H_{ß}) zu der Summe der Schmelzenthalpien von ß- und α-kristalliner Phase (H_{ß} + H_{α}) bestimmt.

### Dichte

Die Dichte wird nach DIN 53 479, Verfahren A, bestimmt.

### Permeabilität (Gurley-Wert)

Die Permeabilität der Folien wurde mit dem Gurley Tester 4110, nach ASTM D 726-58 gemessen. Dabei wird die Zeit (in sec) bestimmt die 100 cm³ Luft benötigen, um durch die Etikettenfläche von 1 Inch² (6,452 cm²) zu permeieren. Die Druckdifferenz über der Folie entspricht dabei dem Druck einer Wassersäule von 12,4 cm Höhe. Die benötigte Zeit entspricht dann dem Gurley-Wert.

### Abschaltfunktion

Die Abschaltfunktion wird durch Gurleymessungen vor und nach einer Temperaturbehandlung bei einer Temperatur von 130°C bestimmt. Der Gurley Wert der Folie wird wie vorstehend beschrieben gemessen. Anschließend wird die Folie eine Minute lang im Wärmeofen der Temperatur von 130°C ausgesetzt. Anschließend wird der Gurley Wert wie beschrieben erneut ermittelt. Die Abschaltfunktion ist gegeben, wenn die Folie nach der Temperaturbehandlung einen um mindestens 30% erhöhten Gurley Wert aufweist und/oder wenn der Gurley Wert nach der Temperaturbehandlung mindestens 6000s beträgt.

Die Erfindung wird nunmehr durch die nachfolgenden Beispiele erläutert.

### Beispiel 1

Nach dem Coextrusionsverfahren wurde aus einer Breitschlitzdüse bei einer Extrusionstemperatur von 240 bis 250°C °C eine dreischichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die dreischichtige Folie hatte einen Schichtaufbau äußere Abschaltschicht /weiter Schicht/ äußere Abschaltschicht. Die einzelnen Schichten der Folie hatten die folgende Zusammensetzung:
Äußere Abschaltschichten mit einer Dicke von jeweils 10µm (erste und zweite Deckschicht):
   ca. 75 Gew.-% hochisotaktisches Propylenhomopolymerisat (PP) mit einer ¹³C-NMR Isotaktizität von 97% und einem n-heptanlöslichen Anteil von 2,5 Gew.-% (bezogen auf 100 % PP) und einem Schmelzpunkt von 165 °C; und einem Schmelzflußindex von 2,5 g/10 min bei 230 °C und 2,16 kg Belastung (DIN 53 735) und
   ca. 25 Gew.-% Propylen-Ethylen-Blockcopolymerisat II mit einem Ethylenanteil von 18 Gew.-% bezogen auf das Blockcopolymer und einem MFI (230°C und 2,16 kg) von 0,8 g/10min und Schmelzpunkt von 144°C, der Schmelzebereich beginnt bei 70°C (DSC)
   0,1 Gew.-% Ca-Pimelat als ß-Nukleierungsmittel
   weitere Schicht (Innere Basisschicht mit einer Dicke von 30µm):
      ca. 75 Gew.-% hochisotaktisches Propylenhomopolymerisat (PP) mit einer 13C-NMR Isotaktizität von 97% und einem n-heptanlöslichen Anteil von 2,5 Gew.-% (bezogen auf 100 % PP) und einem Schmelzpunkt von 165 °C; und einem Schmelzflußindex von 2,5 g/10 min bei 230 °C und 2,16 kg Belastung (DIN 53 735) und
      ca. 25 Gew.-% Propylen-Ethylen-Blockcopolymerisat I mit einem MFI (230°C und 2,16 kg) von 5 g/10min und einem Schmelzpunkt (DSC) von 164°C, der Schmelzebereich beginnt bei 130°C (DSC) 0,1 Gew.-% Ca- Pimelat als ß-Nukleierungsmittel

Die Folie enthielt zusätzlich in jeder Schicht Stabilisator und Neutralisationsmittel in üblichen Mengen.

Die aufgeschmolzenen Polymermischungen wurde nach der Coextrusion über eine erste Abzugswalze und ein weiteres Walzentrio abgezogen und verfestigt, anschließend längsgestreckt, quergestreckt und fixiert, wobei im einzelnen die folgenden Bedingungen gewählt wurden:

| | |
|---|---|
| Extrusion: | Extrusionstemperatur 245°C |
| Abzugswalze: | Temperatur 120°C, Verweilzeit 55 sec. |
| Längsstreckung: | Streckwalze T = 90 °C |
| Längsstreckung um den | Faktor 4 |
| Querstreckung: | Aufheizfelder T = 130 °C |
| Streckfelder | T = 130°C |
| Querstreckung um den | Faktor 4 |

Die so hergestellte poröse Folie war ca. 50 µm dick und wies eine Dichte von 0,43 g/cm³ auf und zeigte ein gleichmäßiges weiß-opakes Aussehen. Der Gurley-Wert betrug 3000 s. Nach der Temperaturbehandlung im Ofen bei 130°C für 1 min betrug der Gurley-Wert >10000 s.

### Beispiel 2

Es wurde eine Folie wie in Beispiel 1 beschrieben hergestellt. Im Unterschied zu Beispiel 1 wurden jetzt 45 Gew.-% des Propylenblockcopolymeren II in den äußeren Abschaltschichten eingesetzt. Der Anteil des Propylenhomopolymeren wurde entsprechend auf 55 Gew.-% reduziert. Die Zusammensetzung der inneren Basisschicht, sowie die Schichtdicken und die Verfahrensparameter wurde nicht geändert. Die so hergestellte poröse Folie war ca. 50 µm dick und wies eine Dichte von 0,46 g/cm³ auf und zeigte ein gleichmäßiges weiß-opakes Aussehen. Der Gurley-Wert betrug 4500 s. Nach dem Temperaturbehandlung im Ofen bei 130°C für 1min betrug der Gurley-Wert >10000s.

### Beispiel 3

Mit den in Beispiel 1 beschriebenen Verfahrensparametern wurde eine zweischichtige Folie mit der folgenden Zusammensetzung hergestellt Abschaltschicht von 15µm
Ca. 30 Gew.-% Propylenblockcopolymeren II, welches in der Deckschicht von Beispiel 1 verwendet wurde und
70 Gew.-%. Propylenhomopolymeren, welches in Beispiel 1 verwendet wurde zweite Schicht von 15µm
20 Gew. % des Propylenblockcopolymeren I, welches in der inneren Basisschicht von Beispiel 1 verwendet wurde
80 Gew.-% des Propylenhomopolymeren, welches in Beispiel 1 verwendet wurde.

Die so hergestellte poröse Folie war ca. 30 µm dick, wies eine Dichte von 0,40 g/cm³ auf und zeigte ein gleichmäßiges weiß-opakes Aussehen. Der Gurley-Wert betrug 2500 s. Nach der Temperaturbehandlung im Ofen bei 130°C für 1min betrug der Guriey-Wert >10000 s/ 100 cm³.

### Beispiel 4

Es wurde eine Folie wie in Beispiel 3 beschrieben hergestellt. Im Unterschied zu Beispiel 3 wurde in der zweiten Schicht der Anteil an Propylenblockcopolymeren I auf 50 Gew.-% erhöht und der Anteil des Propylenhomopolymeren wurde entsprechend auf 50 Gew.-% reduziert. Die Zusammensetzung der inneren Basisschicht, sowie die Schichtdicken und die Verfahrensparameter wurden gegenüber Beispiel 3 nicht geändert.
Die so hergestellte poröse Folie war ca. 50 µm dick, wies eine Dichte von 0,41 g/cm³ auf und zeigte ein gleichmäßiges weiß-opakes Aussehen. Der Gurley-Wert betrug 3000 s. Nach der Temperaturbehandlung im Ofen bei 130°C für 1min betrug der Gurley-Wert >10000 s.

### Vergleichsbeispiel:

Es wurde eine Folie wie in Beispiel 1 beschrieben hergestellt. Im Unterschied zu Beispiel 1 wurde die Zusammensetzung der beiden äußeren Schichten geändert: Äußere Schichten: (erste und zweite Deckschicht):
ca. 75 Gew.-% hochisotaktisches Propylenhomopolymerisat (PP) mit einer ¹³C-NMR Isotaktizität von 97% und einem n-heptanlöslichen Anteil von 2,5 Gew.-% (bezogen auf 100 % PP) und einem Schmelzpunkt von 165°C; und einem Schmelzflußindex von 2,5 g/10 min bei 230 °C und 2,16 kg Belastung (DIN 53 735) und
ca. 25 Gew.-% Propylen-Ethylen-Blockcopolymerisat I mit einem MFI (230°C und 2,16 kg) von 5 g/10min und einem Schmelzpunkt (DSC) von 164°C, der Schmelzebereich beginnt bei 130°C (DSC)
0,1 Gew.-% Ca- Pimelat als ß-Nukleierungsmittel

Die Zusammensetzung der Basisschicht, sowie die Schichtdicken und die Verfahrensparameter wurde nicht geändert. Die so hergestellte poröse Folie war ca. 50 µm dick und wies eine Dichte von 0,40 g/cm³ auf und zeigte ein gleichmäßiges weiß-opakes Aussehen. Der Gurley-Wert betrug 500 s. Nach der Temperaturbehandlung im Ofen bei 130°C für 1 min betrug der Gurley-Wert 550s.

Der Nachweis eines Abschalteffektes ist mit Erreichen eines Gurley-Wertes von 10.000s erbracht. Die Messung wurde daher nach 10.000s abgebrochen und zeigt daß der tatasächliche Gurley Wert über 10.000s liegt.

Die Gurley Werte vor und nach der Temperaturbehandlung sowie die mechanischen Festigkeiten der Folien sind in der nachstehenden Tabelle zusammengefaßt:

**Tabelle**

| Beispiel | Gurley Wert sec | Gurley Wert sec nach Temperaturbehandlung | E-modul in MD/TD N/mm² |
|---|---|---|---|
| VB | 500 | 550 | 820/ 1780 |
| 1 | 3000 | > 10.000 | 800/ 1750 |
| 2 | 4500 | > 10.000 | 780/ 1740 |
| 3 | 2500 | > 10.000 | 740/ 1690 |
| 4 | 3500 | > 10.000 | 720/ 1590 |

## Patentansprüche

1. Biaxial orientierte mikroporöse Folie, aus mindestens zwei coextrudierten Schichten, umfassend einer äußere Abschaltschicht und eine weitere Schicht, wobei beide Schichten eine Mischung aus Propylenhomopolymer und Propylen-Blockcopolymer und ß-Nukleierungsmittel enthalten, **dadurch gekennzeichnet, daß** das Propylenblockcopolymere I der weiteren Schicht einen Schmelzpunkt von über 140°C aufweist und das Propylenblockcopolymer II der äußeren Abschaltschicht einen Schmelzbereich aufweist, der bei einer Temperatur im Bereich von 50 bis 120°C beginnt und der Schmelzpunkt des Propylenblockcopolymeren I größer ist als der Schmelzpunkt des Propylenblockcopolymeren II.

2. Folie nach Anspruch 1, **dadurch gekennzeichnet, daß** das Propylen-Blockcopolymere II einen Schmelzpunkt von unter 150°C aufweist und der Schmelzebereich bei einer Temperatur in einem Bereich von 50 und 110°C beginnt.

3. Folie nach Anspruch 1 oder 2, **dadurch gekennzeichnet, daß** das Propylen-Blockcopolymere II einen Ethylen oder Butylengehalt von 10 bis 25 Gew.-% und einen Schmelzflußindex von 0,1 bis 10 g/10min (bei 2,16kg und 230°C) aufweist.

4. Folie nach einem der Ansprüche 1 bis 3, **dadurch gekennzeichnet, daß** das Propylen-Blockcopolymere I einen Schmelzpunkt von 150 bis 170°C aufweist und der Schmelzebereich bei einer Temperatur von über 120°C beginnt.

5. Folie nach einem der Ansprüche 1 bis 4, **dadurch gekennzeichnet, daß** das Propylen-Blockcopolymere I einen Ethylen oder Butylengehalt von 1 bis 20 Gew.-% und einen Schmelzflußindex von 1 bis 20 g/10min (bei 2,16kg und 230°C) aufweist.

6. Folie nach einem der Ansprüche 1 bis 5, **dadurch gekennzeichnet, daß** die weitere Schicht 50 bis 80 Gew.-% Propylenhomopolymer, 20 bis 50 Gew.-% Blockcopolymer I und 50 bis 10.000ppm ß-Nukleierungsmittel enthält und die äußere Abschaltschicht 50 bis 80 Gew.-% Propylenhomopolymer, 20 bis 50 Gew.-Blockcopolymer II und 50 bis 10.000ppm ß-Nukleierungsmittel enthält.

7. Folie nach einem der Ansprüche 1 bis 6, **dadurch gekennzeichnet, daß** das Propylenhomopolymere ein hochisotaktische Polypropylen mit einer Kettenisotaxie (¹³C-NMR) von 95 bis 98% ist.

8. Folie nach einem der Ansprüche 1 bis 7, **dadurch gekennzeichnet, daß** das Nukleiierungsmittel ein Calciumsalz der Pimelinsäure oder der Suberinsäure oder ein Carboxamid ist.

9. Folie nach einem der Ansprüche 1 bis 8, **dadurch gekennzeichnet, daß** die Dichte der Folie in einem Bereich 0,2 bis 0,6 g/cm³ liegt.

10. Folie nach einem der Ansprüche 1 bis 9, **dadurch gekennzeichnet, daß** die Folie einen Gurley Wert von 100 bis 5000 s/100cm³ aufweist.

11. Folie nach einem der Ansprüche 1 bis 10, **dadurch gekennzeichnet, daß** die Folie nach einer Temperaturbehandlung von einer Minute bei einer Temperatur von 130°C einen Gurley Wert aufweist, der mindestens 30% über dem Gurley Wert der Folie vor der Temperaturbehandlung liegt.

12. Folie nach einem der Ansprüche 1 bis 11, **dadurch gekennzeichnet, daß** das die Folie dreischichtig ist und beidseitig äußere Abschaltschichten aufweist und die weitere Schicht die Basisschicht der Folie bildet.

13. Folie nach einem der Ansprüche 1 bis 11, **dadurch gekennzeichnet, daß** die Folie vier oder fünfschichtig ist und die Basisschicht eine weitere Abschaltschicht der Folie ist und die Zwischenschicht/en aus Polypropylenhomopolymer und Propylen-Blockcopolymer I und ß-Nukleierungsmittel aufgebaut ist/sind.

14. Folie nach einem der Ansprüche 1 bis 11, **dadurch gekennzeichnet, daß** die Folie vier oder fünfschichtig ist und eine oder beide Zwischenschichten aus Polypropylenhomopolymer und Propylen-Blockcopolymer I und ß-Nukleierungsmittel aufgebaut ist.

15. Folie nach einem der Ansprüche 1 bis 14, **dadurch gekennzeichnet, daß** das die äußere Abschaltschicht eine Dicke von 3 bis 30µm aufweist.

16. Folie nach einem der Ansprüche 1 bis 15, **dadurch gekennzeichnet, daß** das die Folie eine Dicke von 15 bis 100µm aufweist.

17. Verfahren zur Herstellung einer Folie nach einem oder mehreren der Ansprüche 1 bis 16, **dadurch gekennzeichnet, daß** die Folie nach dem Stenterverfahren hergestellt ist und die Abzugswalzentemperatur in einem Bereich von 60 bis 130°C liegt.

18. Verfahren nach Anspruch 17, **dadurch gekennzeichnet, daß** die unverstreckte Vorfolie einen Gehalt an ß-Kristalliten von 40 bis 95% aufweist.

19. Verfahren nach Anspruch 17 oder 18, **dadurch gekennzeichnet, daß** die Folie bei einer Temperatur in Längs- und Querrichtung verstreckt wird, die unterhalb des Beginns Schmelzebereichs des Blockcopolymeren II liegt.

20. Verfahren nach Anspruch 19, **dadurch gekennzeichnet, daß** die Folie unterhalb von 135°C in Längs- und Querrichtung verstreckt wird.

21. Verwendung einer Folie nach einem der Ansprüche 1 bis 16 als Separator in Batterien oder Akkumulatoren.

## Claims

1. A biaxially oriented microporous film composed of at least two coextruded layers comprising an external shut-off layer and a further layer, wherein both layers contain a mixture of propylene homopolymer and propylene block copolymer and ß-nucleation agent, **characterised in that** the propylene block copolymer I of the further layer has a melting point of over 140 °C and the propylene block copolymer II of the external shut-off layer has a melting range starting at a temperature ranging from 50 to 120 °C and the melting point of the propylene block copolymer I is greater than the melting point of the propylene block copolymer II.

2. The film according to Claim 1, **characterised in that** the propylene block copolymer II has a melting point below 150 °C and the melting range starts at a temperature ranging from 50 to 110 °C.

3. The film according to Claim 1 or 2, **characterised in that** the propylene block copolymer II has an ethylene or butylene content of 10 to 25 % by weight and a melt flow index of 0.1 to 10 g/10 min (at 2.16 kg and 230 °C).

4. The film according to one of Claims 1 to 3, **characterised in that** the propylene block copolymer I has a melting point of 150 to 170 °C and the melting range starts at a temperature of over 120 °C.

5. The film according to one of Claims 1 to 4, **characterised in that** the propylene block copolymer I has an ethylene or butylene content of 1 to 20 % by weight and a melt flow index of 1 to 20 g/10 min (at 2.16 kg and 230 °C).

6. The film according to one of Claims 1 to 5, **characterised in that** the further layer contains 50 to 80 % by weight propylene homopolymer, 20 to 50 % by weight block copolymer I, and 50 to 10,000 ppm β-nucleation agent and the external shut-off layer contains 50 to 80 % by weight propylene homopolymer, 20 to 50 % by weight block copolymer II, and 50 to 10,000 ppm β-nucleation agent.

7. The film according to one of Claims 1 to 6, **characterised in that** the propylene homopolymer is a high isotactic polypropylene with chain isotaxy (¹³C-NMR) of 95 to 98 %.

8. The film according to one of Claims 1 to 7, **characterised in that** the nucleation agent is a calcium salt of pimelic acid or of suberic acid or is a carboxamide.

9. The film according to one of Claims 1 to 8, **characterised in that** the density of the film ranges from 0.2 to 0.6 g/cm³.

10. The film according to one of Claims 1 to 9, **characterised in that** the film has a Gurley value of 100 to 5000 s/100 cm³.

11. The film according to one of Claims 1 to 10, **characterised in that** after one minute's heat treatment at a temperature of 130 °C the film has a Gurley value that is at least 30 % higher than the Gurley value of the film before the heat treatment.

12. The film according to one of Claims 1 to 11, **characterised in that** the film is three-layered and has external shut-off layers on both sides and the further layer forms the base layer of the film.

13. The film according to one of Claims 1 to 11, **characterised in that** the film is four- or five-layered and the base layer is a further shut-off layer of the film and the intermediate layer(s) is/are made from polypropylene homopolymer and propylene block copolymer I and β-nucleation agent.

14. The film according to one of Claims 1 to 11, **characterised in that** the film is four- or five-layered and one or both intermediate layers is/are made from polypropylene homopolymer and propylene block copolymer I and β-nucleation agent.

15. The film according to one of Claims 1 to 14, **characterised in that** the external shut-off layer has a thickness of 3 to 30 µm.

16. The film according to one of Claims 1 to 15, **characterised in that** the film has a thickness of 15 to 100 µm.

17. A method for producing a film according to one or more of Claims 1 to 16, **characterised in that** the film is produced according to the stenter method and the draw-off roller temperature ranges from 60 to 130 °C.

18. The method according to Claim 17, **characterised in that** the unstretched precursor film has a β-crystallite content of 40 to 95 %.

19. The method according to Claim 17 or 18, **characterised in that** the film is stretched in a longitudinal and transverse direction at a temperature below the start of the melting range of the block copolymer II.

20. The method according to Claim 19, **characterised in that** the film is stretched in a longitudinal and transverse direction below 135 °C.

21. Use of a film according to one of Claims 1 to 16 as separator in batteries or accumulators.

## Revendications

1. Feuille microporeuse biaxialement orientée, constituée d'au moins deux couches co-extrudées, comprenant une couche d'arrêt extérieure et une autre couche, les deux couches contenant un mélange d'homopolymère de propylène et de copolymère de propylène à blocs et d'agent de β-nucléation, **caractérisée en ce que** le copolymère de propylène à blocs I de ladite autre couche présente un point de fusion supérieur à 140 °C et le copolymère de propylène à blocs II de la couche d'arrêt extérieure présente une plage de fusion commençant à une température comprise entre 50 et 120 °C et le point de fusion du copolymère de propylène à blocs I est plus élevé que le point de fusion du copolymère de propylène à blocs II.

2. Feuille selon la revendication 1, **caractérisée en ce que** le copolymère de propylène à blocs II présente un point de fusion inférieure à 150 °C et ladite plage de fusion commence dans une fourchette allant de 50 à 110 °C.

3. Feuille selon les revendications 1 ou 2, **caractérisée en ce que** le copolymère de propylène à blocs II présente une teneur en éthylène ou butylène comprise entre 10 et 25 % en poids et un indice de fluidité compris entre 0,1 et 10 g/10 min (à 2,16 kg et 230 °C).

4. Feuille selon l'une des revendications 1 à 3, **caractérisée en ce que** le copolymère de propylène à blocs I présente un point de fusion compris entre 150 et 170 °C et ladite plage de fusion commence à une température supérieure à 120 °C.

5. Feuille selon l'une des revendications 1 à 4, **caractérisée en ce que** le copolymère de propylène à blocs I présente une teneur en éthylène ou butylène comprise entre 1 et 20 % en poids et un indice de fluidité compris entre 0,1 et 20 g/10 min (à 2,16 kg et 230 °C).

6. Feuille selon l'une des revendications 1 à 5, **caractérisée en ce que** ladite autre couche contient 50 à 80 % en poids d'homopolymère de propylène, 20 à 50 % en poids de copolymère à blocs I et 50 à 10 000 ppm d'agent de nucléation β, et la couche d'arrêt extérieure contient 50 à 80 % en poids d'homopolymère de propylène, 20 à 50 % en poids de copolymère à blocs II et 50 à 10 000 ppm d'agent de nucléation β.

7. Feuille selon l'une des revendications 1 à 6, **caractérisée en ce que** ledit homopolymère de propylène est un polypropylène hautement isotactique, l'indice d'isotacticité de sa chaîne (¹³C-NMR) étant compris entre 95 et 98 %.

8. Feuille selon l'une des revendications 1 à 7, **caractérisée en ce que** ledit agent de nucléation est un sel de calcium de l'acide pimélique ou de l'acide subérique ou bien un amide d'acide carboxylique.

9. Feuille selon l'une des revendications 1 à 8, **caractérisée en ce que** la densité de ladite feuille est comprise entre 0,2 et 0,6 g/cm³.

10. Feuille selon l'une des revendications 1 à 9, **caractérisée en ce que** ladite feuille présente un indice de Gurley compris entre 100 et 5000 s/100cm³.

11. Feuille selon l'une des revendications 1 à 10, **caractérisée en ce que** ladite feuille présente, suite à un traitement thermique durant une minute à une température de 130 °C, un indice de Gurley qui est supérieur d'au moins 30 % par rapport à l'indice de Gurley de la feuille avant le traitement thermique.

12. Feuille selon l'une des revendications 1 à 11, **caractérisée en ce que** ladite feuille comporte trois couches et présente, des deux côtés, des couches d'arrêt extérieures, ladite autre couche formant la couche de base de la feuille.

13. Feuille selon l'une des revendications 1 à 11, **caractérisée en ce que** ladite feuille comporte quatre ou cinq couches, la couche de base correspondant à une couche d'arrêt supplémentaire de la feuille, et la/les couche(s) intermédiaire(s) étant constituée(s) d'homopolymère de polypropylène et de copolymère de propylène à blocs I et d'agent de nucléation β.

14. Feuille selon l'une des revendications 1 à 11, **caractérisée en ce que** ladite feuille comporte quatre ou cinq couches, la ou les deux couche(s) intermédiaire(s) étant constituée(s) d'homopolymère de polypropylène et de copolymère de propylène à blocs I et d'agent de nucléation β.

15. Feuille selon l'une des revendications 1 à 14, **caractérisée en ce que** la couche d'arrêt extérieure présente une épaisseur comprise entre 3 et 30 µm.

16. Feuille selon l'une des revendications 1 à 15, **caractérisée en ce que** la feuille présente une épaisseur comprise entre 15 et 100 µm.

17. Procédé de fabrication d'une feuille selon une ou plusieurs des revendications 1 à 16, **caractérisé en ce que** ladite feuille est fabriquée selon le procédé à filière plate et la température des cylindres d'appel est comprise entre 60 et 130 °C.

18. Procédé selon la revendication 17, **caractérisé en ce que** le précurseur de feuille présente, avant de subir l'orientation, une teneur en cristallites β comprise entre 40 et 95 %.

19. Procédé selon les revendication 17 ou 18, **caractérisé en ce que** ladite feuille est orientée dans le sens longitudinal et transversal à une température inférieure au début de la plage de fusion du copolymère à blocs II.

20. Procédé selon la revendication 19, **caractérisé en ce que** ladite feuille est orientée dans le sens longitudinal et transversal à moins de 135 °C.

21. Utilisation d'une feuille selon l'une des revendications 1 à 16 en tant que séparateur dans des batteries ou accumulateurs.
